# EUROPEAN PATENT APPLICATION

(11) **EP 2 071 577 A1**
(43) Date of publication of application: **17.06.2009**
(21) Application number: 08170312.6
(22) Date of filing: 28.11.2008
(51) Int. Cl.: G11B 27/10, G11B 27/32, G06F 17/30

(54) **Mobile terminal and method of playing data therein**

(30) Priority: 14.12.2007 KR 20070130919
(71) Applicant: LG Electronics Inc., Seoul 150-721 (KR)
(72) Inventor: Kim, Sang Won, 153-801 Seoul (KR)
(74) Representative: Cabinet Plasseraud

(57) **Abstract**

A mobile terminal includes a user input unit for receiving user inputs, a display unit for displaying information, an audio output module for outputting an audio signal, and a controller for processing a user input to select at least a first specific position in multimedia data, controlling the display unit to display multimedia information related to the selected at least a first specific position and sorting the multimedia information with respect to at least a second specific position in the multimedia data.

## Description

The present invention relates to a mobile terminal and a method of playing data therein. In particular, the present invention performs a function using multimedia information related to a specific position in multimedia data.

A mobile terminal may be configured to perform various functions such as data and voice communications, capturing images and video via a camera, recording audio, playing music files via a speaker system, and displaying images and video on a display. Some mobile terminals have additional functions such as game playing and multimedia playing. More recently, some mobile terminals have been configured to receive broadcast and multicast signals which permit viewing of content such as videos and television programs.

Efforts are ongoing to support and increase the functionality of mobile terminals. Such efforts include software and hardware improvements, as well as changes and improvements in the structural components which form the mobile terminal.

An object of the present invention is to provide a mobile terminal and a method of playing data therein, by which a specific function can be performed using information related to a specific timing position in the data.

According to an embodiment of the present invention, a mobile terminal includes a user input unit for receiving user inputs, a display unit for displaying multimedia data and related multimedia information, and a controller adapted for processing a user input to select at least a first specific position in multimedia data, controlling the display unit to display multimedia information related to the multimedia data and depending upon said selected at least a first specific position and sorting the multimedia information with respect to at least a second specific position in the multimedia data. In one aspect of the present invention, the controller sorts the multimedia information according to chronological order and plays the multimedia data according to time information.

In an aspect of the present invention, the mobile terminal further includes a memory for storing the multimedia data, wherein the controller controls the display to display the multimedia information while playing the multimedia data stored in the memory. The controller further controls the display to display the multimedia information on a play screen related to the multimedia data such that the multimedia information corresponds to the multimedia data being played.

In an aspect of the present invention, the controller also processes a user input to select the at least a second specific position. The controller plays the multimedia data according to time information and controls the display to display the multimedia information such that further information related to a user-selected one of the at least a first specific position and at least a second specific position is displayed even when the multimedia is not played. The further information includes at least one comment associated with the multimedia data.

In an aspect of the present invention, the controller creates a data file in the memory for displaying and storing the further information. The controller controls the display to display the multimedia information on a play screen related to the multimedia data such that the multimedia information corresponds to the multimedia data being played. Alternatively, the multimedia data is stored in a specific website and the controller controls the display to display the further information while playing the multimedia data stored in the specific website.

In an aspect of the present invention, the user is a website visitor and the controller creates a data file in the website for displaying and storing the further information. The controller creates the data file by separating the further information from the multimedia data stored on the website and downloading the further information. The controller may create the data file by separating the further information from the multimedia data stored on the website and storing the further information in a database corresponding to a user ID on the website. The controller plays the multimedia data from a specific position corresponding to a specific point selected by the website visitor in the further information.

In an embodiment of the present invention, a method of playing multimedia data in a mobile terminal includes processing a user input to select at least a first specific position in multimedia data, displaying multimedia data and multimedia information related to the multimedia data and depending upon said selected at least a first specific position, and sorting the multimedia information with respect to at least a second specific position. Sorting the multimedia information includes arranging the multimedia information in chronological order. The method may further include playing the multimedia data according to time further information, storing the multimedia data, and displaying the multimedia information while playing the stored multimedia data. The method further includes displaying the multimedia information such that the multimedia information corresponds to the multimedia data being played and receiving a user input to select the at least a second specific position.

In an aspect of the present invention, the method further includes displaying the multimedia information such that further information related to a user-selected one of the at least a first specific position and at least a second specific position is displayed even when the multimedia is not played. The further information includes at least one comment associated with the multimedia data.

In an aspect of the present invention, the method further includes storing the multimedia data and displaying the multimedia information while playing the stored multimedia data. The method may further include creating a data file for displaying and storing the further information, and displaying the multimedia information such that the multimedia information corresponds to the multimedia data being played. Alternatively, the method further includes storing the multimedia data on a specific website and displaying the further information while playing the multimedia data stored on the specific website. The method may further include displaying the further information such that the further information corresponds to the multimedia data being played. The user may be a website visitor.

In an aspect of the present invention, the method further includes creating a data file on the website for displaying and storing the further information. Creating the data file includes separating the further information from the multimedia data stored on the website and downloading the further information. Alternatively, creating the data file includes separating the further information from the multimedia data stored on the website and storing the further information in a database corresponding to a user ID on the website. The method may further include playing the multimedia data from a specific position corresponding to a specific point selected by the website visitor in the further information.

It is to be understood that both the foregoing general description and the following detailed description of the present invention are exemplary and explanatory and are intended to provide further explanation of the invention as claimed.

The above and other features and advantages of the present invention will become more apparent by describing in detail preferred embodiments thereof with reference to the attached drawings.

FIG. 1 is a block diagram of a mobile terminal according to an embodiment of the present invention.

FIG. 2 is a perspective view of a front side of a mobile terminal according to an embodiment of the present invention.

FIG. 3 is a rear view of the mobile terminal shown in FIG. 2.

FIG. 4 is a block diagram of a CDMA wireless communication system operable with the mobile terminal of FIGs. 1 to 3.

FIG. 5 is a flowchart illustrating playing data using information related to a specific position in the data in a mobile terminal according to one embodiment of the present invention.

FIG. 6 is a screen view on a display of a mobile terminal according to one embodiment of the present invention and illustrates writing a comment related to a specific position in multimedia data.

FIGs. 7 to 15 are screen views on a display of a mobile terminal according to one embodiment of the present invention and illustrate performing a specific function using multimedia information related to a specific position in multimedia data.

In the following detailed description, reference is made to the accompanying drawing figures which form a part hereof, and which show by way of illustration specific embodiments of the invention. It is to be understood by those of ordinary skill in this technological field that other embodiments may be utilized, and structural, electrical, as well as procedural changes may be made without departing from the scope of the present invention. Wherever possible, the same reference numbers will be used throughout the drawings to refer to the same or similar parts.

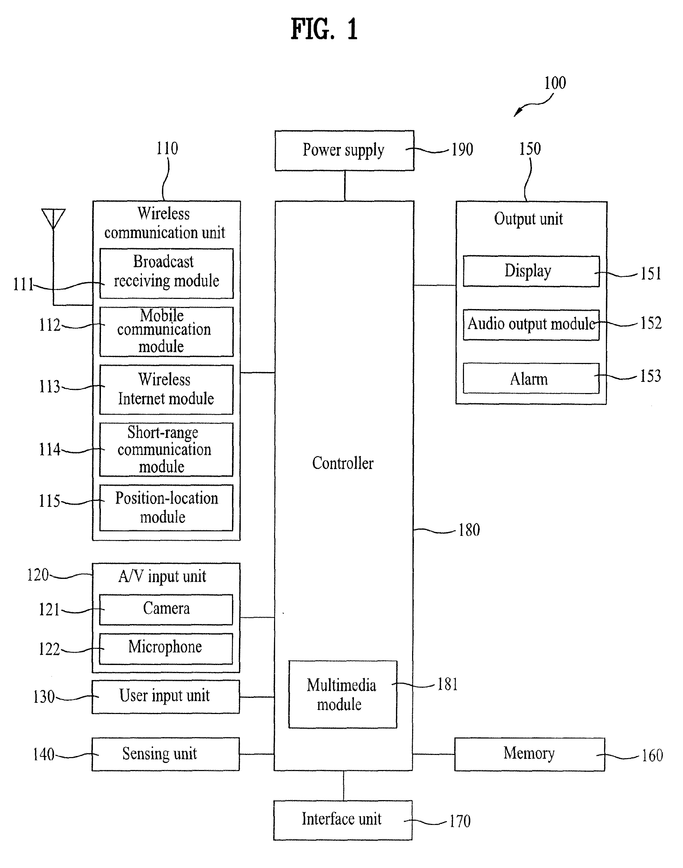

FIG. 1 is a block diagram of a mobile terminal 100 according to an embodiment of the present invention. The mobile terminal 100 may be implemented as a variety of different types, such as mobile phones, user equipments, smart phones, computers, digital broadcast terminals, personal digital assistants, portable multimedia players (PMP) and navigators. Although FIG. 1 shows the mobile terminal 100 having various components, not all of the illustrated components may be required and more or less number of components may be implemented in the mobile terminal.

Referring to FIG. 1, a wireless communication unit 110 is configured with several commonly implemented components. For example, the wireless communication unit 110 includes one or more components which permit wireless communication between the mobile terminal 100 and a wireless communication system or network within which the mobile terminal is located.

The broadcast receiving module 111 receives a broadcast signal and/or broadcast associated information from an external broadcast managing entity via a broadcast channel. The broadcast channel includes a satellite channel and a terrestrial channel. The broadcast managing entity refers generally to a system which transmits a broadcast signal and/or broadcast associated information. Examples of the broadcast associated information include information associated with a broadcast channel, a broadcast program, and a broadcast service provider. Specifically, the broadcast associated information includes an electronic program guide (EPG) of digital multimedia broadcasting (DMB) and electronic service guide (ESG) of digital video broadcast-handheld (DVB-H).

The broadcast signal may be implemented as various types of signals including a TV broadcast signal, a radio broadcast signal, and a data broadcast signal. If desired, the broadcast signal may further include a broadcast signal combined with a TV or radio broadcast signal. The broadcast receiving module 111 may be configured to receive broadcast signals transmitted from various types of broadcast systems. By non-limiting example, such broadcasting systems include digital multimedia broadcasting-terrestrial (DMB-T), digital multimedia broadcasting-satellite (DMB-S), digital video broadcast-handheld (DVB-H), the data broadcasting system known as media forward link only (MediaFLO®) and integrated services digital broadcast-terrestrial (ISDB-T). Receiving multicast signals is also possible. If desired, data received by the broadcast receiving module 111 may be stored in a suitable device, such as memory 160.

The mobile communication module 112 transmits/receives wireless signals to/from one or more network entities, such as a base station and Node-B. Such signals may represent audio, video, multimedia, control signaling, and data.

The wireless Internet module 113 supports Internet access for the mobile terminal 100. This module may be internally or externally coupled to the mobile terminal 100.

The short-range communication module 114 facilitates relatively short-range communications. Suitable technologies for implementing this module include radio frequency identification (RFID), infrared data association (IrDA), ultra-wideband (UWB), as well as the networking technologies commonly referred to as BLUETOOTH and ZIGBEE.

Position-location module 115 identifies or obtains the location of the mobile terminal 100. If desired, this module may be implemented using global positioning system (GPS) components which cooperate with associated satellites, network components, or combinations thereof.

Audio/video (A/V) input unit 120 provides audio or video signal input to the mobile terminal 100. The A/V input unit 120 includes a camera 121 and a microphone 122. The camera 121 receives and processes image frames of still pictures or video. The microphone 122 receives an external audio signal while the mobile terminal 100 is in a particular mode, such as a phone call mode, a recording mode or a voice recognition mode. The audio signal is processed and converted into digital data.

The A/V input unit 120 typically includes assorted noise removing algorithms to remove noise generated in the course of receiving the external audio signal. Data generated by the A/V input unit 120 may be stored in the memory 160, utilized by an output unit 150, or transmitted via one or more modules of the wireless communication unit 110. If desired, two or more microphones and/or cameras may be used.

The user input unit 130 generates input data responsive to user manipulation of an associated input device or devices, such as a keypad, a dome switch, a jog wheel, a jog switch, and a touchpad, for example, static pressure/capacitance. In particular, the user input unit 130 may be configured as a touchpad in cooperation with a touchscreen display.

The sensing unit 140 provides status information for various aspects of the mobile terminal 100. The sensing unit 140 may detect an open/close status of the mobile terminal 100, relative positioning of components, such as a display and keypad, a change in position of the mobile terminal or a component of the mobile terminal, a presence or absence of user contact with the mobile terminal, orientation or acceleration/deceleration of the mobile terminal. For example, in a slide-type mobile terminal, the sensing unit 140 senses whether a sliding portion of the mobile terminal is open or closed. In other examples, the sensing unit 140 senses the presence or absence of power provided by the power supply 190 and the presence or absence of a connection between the interface unit 170 and an external device.

The interface unit 170 is often implemented to couple the mobile terminal 100 with external devices. Typical external devices include wired/wireless headphones, external chargers, power supplies, earphones, microphones, and storage devices configured to store data, such as audio, video, and pictures. The interface unit 170 may be configured using a wired/wireless data port, audio input/output ports, video input/output ports, and a card socket for coupling to a memory card, subscriber identity module (SIM) card, user identity module (UIM) card, and removable user identity module (RUIM) card.

The output unit 150 generally includes various components that support the output requirements of the mobile terminal 100. Display 151 is typically implemented to visually display information associated with the mobile terminal 100. For example, if the mobile terminal 100 is operated in a phone call mode, the display 151 provides a user interface or graphical user interface which includes information associated with placing, conducting, and terminating a phone call. As another example, if the mobile terminal 100 is in a video call mode or a photographing mode, the display 151 may additionally or alternatively display images which are associated with these modes.

In one aspect of the present invention, the display 151 is configured as a touch screen working in cooperation with an input device, such as a touchpad. In this configuration, the display 151 functions as both an output device and an input device.

The display 151 may be implemented using known display technologies, for example, a liquid crystal display (LCD), a thin film transistor-liquid crystal display (TFT-LCD), an organic light-emitting diode display (OLED), a flexible display and a three-dimensional display. The mobile terminal 100 may include one or more of such displays. For example, in a two-display embodiment, a first display is configured as an internal display which is viewable when the mobile terminal 100 is in an open position and a second display is configured as an external display which is viewable in both the open and closed positions.

FIG. 1 further shows the output unit 150 having an audio output module 152 which supports the audio output requirements of the mobile terminal 100. The audio output module 152 is often implemented using one or more speakers, buzzers, other audio producing devices, or combinations thereof. The audio output module 152 functions in various modes including a call-receiving mode, a call-placing mode, a recording mode, a voice recognition mode and a broadcast reception mode. During operation, the audio output module 152 outputs audio related to a particular function to notify a received call or message and errors.

The output unit 150 also includes an alarm 153, which is used to signal or identify a particular event associated with the mobile terminal 100. Typical events include receiving a call, a message or a user input. An example of the output includes providing tactile sensations to a user. For example, the alarm 153 may be configured to vibrate when a call or message is received. As another example, vibration is provided by the alarm 153 when a user input is received, thus providing a tactile feedback mechanism. The various output provided by the components of the output unit 150 may be separately performed or performed by using any combination of such components.

The memory 160 is used to store various types of data to support processing, control, and storage requirements of the mobile terminal 100. Examples of such data include program instructions for applications operating on the mobile terminal 100, contact data, phonebook data, messages, pictures, and video. The memory 160 may be implemented using any type or combination of suitable volatile and non-volatile memory or storage devices including random access memory (RAM), static random access memory (SRAM), electrically erasable programmable read-only memory (EEPROM), erasable programmable read-only memory (EPROM), programmable read-only memory (PROM), read-only memory (ROM), magnetic memory, flash memory, magnetic or optical disk, card-type memory, or other similar memory or data storage device.

The controller 180 typically controls the overall operations of the mobile terminal 100. For example, the controller 180 controls and processes operations for voice calls, data communications, video calls, camera and recording. The controller 180 may additionally include a multimedia module 181 which provides multimedia play function. The multimedia module 181 may be configured as part of the controller 180 as shown in FIG. 1, or this module may be implemented as a separate component.

The power supply 190 provides power required by the various components of the mobile terminal 100. The provided power may be internal power, external power, or combinations thereof.

Various embodiments described herein may be implemented in a computer-readable medium using, for example, computer software, hardware, or combination thereof. For a hardware implementation, the embodiments described herein may be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a selective combination thereof. In some cases, such embodiments are implemented by the controller 180.

For a software implementation, the embodiments described herein may be implemented with separate software modules such that each of the software modules performs one or more of the functions and operations described herein. The software codes can be implemented with a software application written in any suitable programming language and may be stored in the memory 160, and executed by the controller 180 or a processor.

The mobile terminal 100 may be implemented in a variety of configurations including a folder-type, a slide-type, a bar-type, a rotational-type, a swing-type and combinations thereof. Although a slide-type mobile terminal is described in the application, the same or similar embodiments will apply to other types of mobile terminals as well.

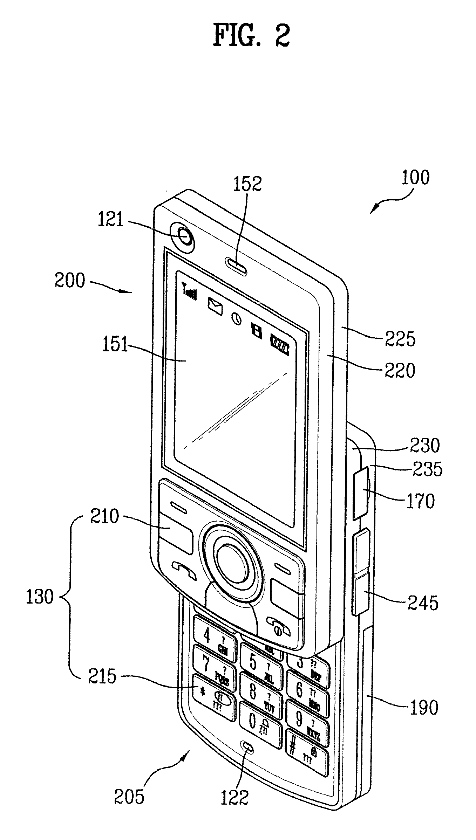

Referring to FIG. 2, the mobile terminal 100 includes a first body 200 slidably coupled with a second body 205. The user input unit 130 is implemented as function keys 210 and keypad 215. The function keys 210 are associated with the first body 200 and the keypad 215 is associated with the second body 205. The keypad 215 includes various keys including numbers, characters, and symbols such that a user places a call, composes a text or multimedia message, and operates the mobile terminal 100 via the keypads.

The first body 200 slides relative to the second body 205 such that the mobile terminal 100 is in an open or closed position. In the closed position, the first body 200 is positioned over the second body 205 such that the keypad 215 is substantially or completely covered by the first body 200. In the open position, the user can access the keypad 215, as well as the display 151 and the function keys 210. The function keys 210 are used for entering commands such as start, stop and scroll.

The mobile terminal 100 is operable in either a standby mode to receive a call or message, receive and respond to network control signaling, or in an active call mode. Typically, the mobile terminal 100 is in the standby mode while in the closed position and in the active mode while in the open position. The mode configuration may be changed as required or desired.

The first body 200 includes a first case 220 and a second case 225, and the second body 205 includes its own first case 230 and second case 235. The first and second cases 220, 225, 230, 235 of the first and second bodies 200, 205 are usually formed of a rigid material such as injection molded plastic, or a metallic material such as stainless steel (STS) and titanium (Ti).

If desired, one or more intermediate cases may be provided between the first cases 220, 230 and second cases 225, 235 of one or both of the first and second bodies 200, 205. The first and second bodies 200, 205 are typically sized to receive electronic components necessary to support operation of the mobile terminal 100.

The first body 200 includes a camera 121 and an audio output unit 152, which is configured as a speaker and positioned close to the display 151. The camera 121 may be constructed such that the position can be adjusted, for example, rotated or swiveled relative to first body 200.

The function keys 210 are positioned adjacent to a lower side of the display 151. The display 151 may be implemented as an LCD or OLED. The display 151 may also be configured as a touchscreen having an underlying touchpad which generates signals in response to the user contact, for example via a finger or stylus, with the touchscreen.

Second body 205 includes a microphone 122 positioned adjacent to the keypad 215 and side keys 245, which is one type of the user input unit 130 and positioned along the side of second body. In one aspect of the present invention, the side keys 245 may be configured as hot keys such that the side keys are associated with a particular function of the mobile terminal 100. The interface unit 170 is positioned adjacent to the side keys 245, and the power supply 190 in a form of a battery is located at a lower portion of the second body 205.

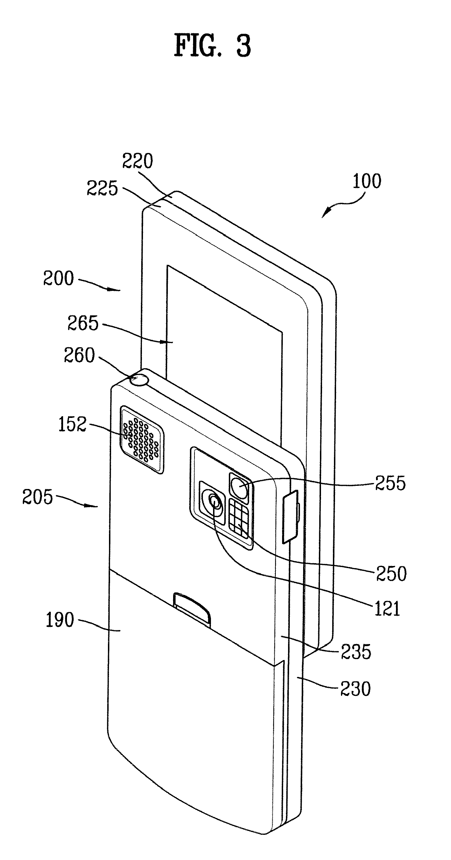

FIG. 3 is a rear view of the mobile terminal 100 described above with regard to FIG. 2. Referring to FIG. 3, the second body 205 includes a camera 221, and an associated flash 250 and mirror 255. The flash 250 operates in conjunction with the camera 221 of the second body 205. The mirror 255 is useful for assisting a user to position the camera 221 in a self-portrait mode. The camera 221 of the second body 205 faces a direction which is opposite to the direction faced by the camera 121 of the first body 200 shown in FIG. 2. The camera 121 of the first body 200 and the camera 221 of the second body 205 may have the same or different capabilities.

In an embodiment of the present invention, the camera 121 of the first body 200 operates with a relatively lower resolution than the camera 221 of the second body 205. Such arrangement works well during a video conference in which reverse link bandwidth capabilities may be limited. The relatively higher resolution of the camera 221 of the second body 205, as shown in FIG. 3, is useful for obtaining higher quality pictures for later use or for transmitting to others.

The second body 205 also includes an audio output module 152 configured as a speaker and located on an upper side of the second body. The audio output modules 152 of the first and second bodies 200, 205 may cooperate to provide stereo sound. Moreover, either or both of these audio output modules 152 may be configured to operate in a speakerphone mode of the mobile terminal 100.

A broadcast signal receiving antenna 260 is located at an upper end of the second body 205. The broadcast signal receiving antenna 260 functions in cooperation with the broadcast receiving module 111 shown in FIG. 1. The broadcast signal receiving antenna 260 may be fixed or retracted into the second body 205. The rear side of the first body 200 includes a slide module 265, which slidably engages with a corresponding slide module located on the front side of the second body 205.

The illustrated arrangement of the various components of the first and second bodies 200, 205 shown in FIGS. 2 and 3 may be modified as required or desired. In general, some or all of the components of one body may alternatively be implemented on the other body. Further, the location and relative positioning of such components are not critical to many embodiments, and the components may be positioned at locations which differ from those shown in the figures described above.

The mobile terminal 100 shown in FIGS. 1-3 may be configured to operate within a communication system which transmits data via frames or packets, including both wireless and wireline communication systems, and satellite-based communication systems. Such communication systems utilize different air interfaces and/or physical layers.

Examples of such air interfaces utilized by the communication systems include frequency division multiple access (FDMA), time division multiple access (TDMA), code division multiple access (CDMA), and universal mobile telecommunications system (UMTS), the long term evolution (LTE) of the UMTS, and the global system for mobile communications (GSM). By way of non-limiting example only, further description will relate to a CDMA communication system, but such teachings apply equally or similarly to other types of systems.

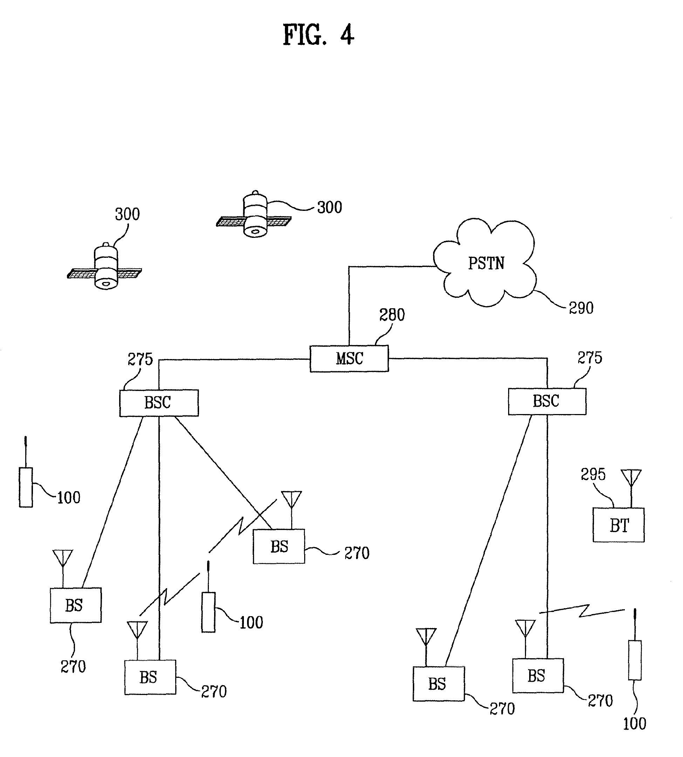

Referring to FIG. 4, a CDMA wireless communication system includes a plurality of mobile terminals 100, a plurality of base stations (BS) 270, base station controllers (BSCs) 275, and a mobile switching center (MSC) 280. The MSC 280 is configured to interface with a conventional public switch telephone network (PSTN) 290. The MSC 280 is also configured to interface with the BSCs 275. The BSCs 275 are coupled to the base stations 270 via backhaul lines. The backhaul lines may be configured according to any of several known interfaces including, E1/T1, ATM, IP, PPP, Frame Relay, HDSL, ADSL, and xDSL. The system may include more than two BSCs 275.

Each base station 270 may include one or more sectors, each sector having an omni-directional antenna or an antenna pointed in a particular direction radially away from the base station. Alternatively, each sector may include two antennas for diversity reception. Each base station 270 may be configured to support a plurality of frequency assignments, with each frequency assignment having a particular spectrum, such as 1.25 MHz or 5 MHz.

The intersection of a sector and frequency assignment may be referred to as a CDMA channel. The base stations 270 may also be referred to as base station transceiver subsystems (BTSs). In some cases, the term "base station" may be used to refer collectively to a BSC 275, and one or more base stations 270. The base stations 270 may also be denoted "cell sites." Alternatively, individual sectors of a given base station 270 may be referred to as cell sites.

A terrestrial digital multimedia broadcasting (DMB) transmitter (BT) 295 broadcasts to the mobile terminals 100 operating within the system. The broadcast receiving module 111 shown in FIG. 1 is typically configured to receive broadcast signals transmitted by the DMB transmitter 295. Similar arrangements may be implemented for other types of broadcast and multicast signaling discussed above.

FIG. 4 further depicts several global positioning system (GPS) satellites 300. Such satellites facilitate locating the position of some or all of the mobile terminals 100. While two GPS satellites 300 are depicted in FIG. 4, useful positioning information may be obtained with greater or fewer satellites depending on the situation. The position-location module 115 shown in FIG. 1 is typically configured to cooperate with the GPS satellites 300 to obtain desired position information. Alternatively, other types of position detection technology, for example, a location technology that may be used in addition to or instead of GPS location technology. If desired, some or all of the GPS satellites 300 may alternatively or additionally be configured to provide satellite DMB transmissions.

During typical operation of the wireless communication system, the base stations 270 receive sets of reverse-link signals from various mobile terminals 100. The mobile terminals 100 engage in calls, messaging, and other communications. Each reverse-link signal received by a given base station 270 is processed within that base station. The resulting data is forwarded to an associated BSC 275. The BSC 275 provides call resource allocation and mobility management functionality including the orchestration of soft handoffs between the base stations 270. The BSCs 275 also route the received data to the MSC 280 which provides additional routing services for interfacing with the PSTN 290. Similarly, the PSTN interfaces with the MSC 280, and the MSC interfaces with the BSCs 275, which in turn control the base stations 270 to transmit sets of forward-link signals to the mobile terminals 100.

In the following description, a method of playing multimedia data in a mobile terminal 100 is described. In particular, the method of playing the multimedia data includes processing a user input to select at least a first specific position in multimedia data and displaying multimedia information related to the selected at least a first specific position. In this case, playing the multimedia data is according to time information. For example, multimedia data includes a moving picture, a music file or MP3 file, and a mobile broadcast. Different contents are output according to positions in the multimedia data when the multimedia data is played.

Multimedia information on a specific position in the multimedia data may include specific time information, for example, a position corresponding to 15 seconds when the multimedia data is played, a specific comment on the specific position in the multimedia data, and a uniform resource locator (URL) of a specific website if the multimedia data is stored in the specific website.

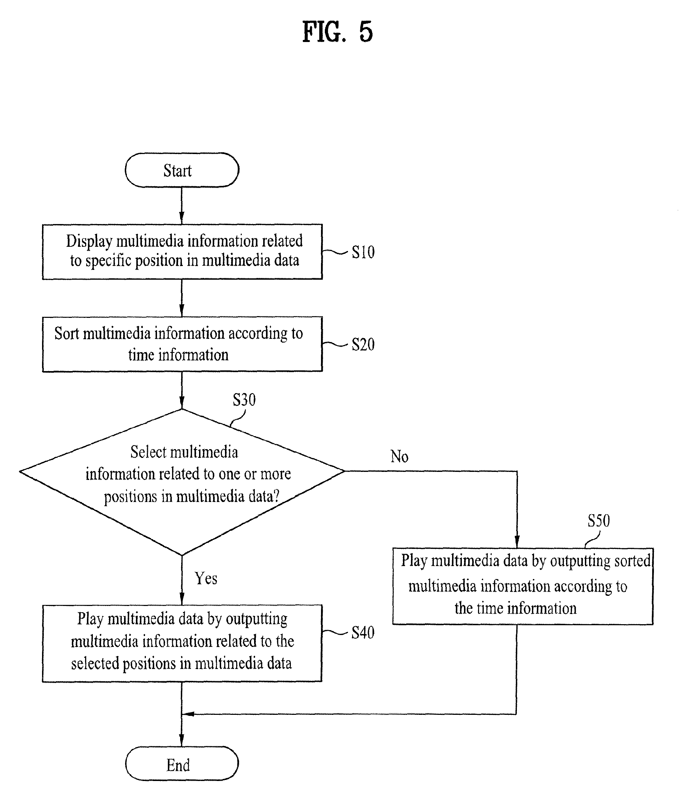

FIG. 5 is a flowchart illustrating playing multimedia data using multimedia information related to a selected at least first specific position in the multimedia data in a mobile terminal according to one embodiment of the present invention. Referring to FIG. 5, the controller 180 displays the multimedia data and the multimedia information on the display 151 [S10]. Specifically, the controller 180 displays the multimedia information while the multimedia data is being played.

The multimedia information may be input by a user. For example, the multimedia information input by the user may be a specific comment written at a specific position in the multimedia data while the multimedia is being played. In other words, a comment on a specific scene or 'scene comment' can be written by the user while a moving picture is being reproduced from the played multimedia data. In one aspect of the present invention, the multimedia information includes specific time information of the multimedia data stored in the mobile terminal 100 or on a specific website.

According to one embodiment of the present invention, the multimedia information related to the specific position may include further information related to a section of the played multimedia data. For example, a scene comment related to a section positioned between 15 seconds and 3 minutes in the multimedia data may be included in the multimedia information.

In one aspect of the present invention, when there is a plurality of multimedia information related to a plurality of specific positions, the plurality of multimedia information may be sorted and displayed according to chronological order or in the order in which the multimedia information has been received. In other words, the controller 180 sorts the multimedia information with reference to the time when the multimedia information was input. Alternatively, the controller 180 sorts the multimedia information according to time information [S20]. For example, the multimedia information is sorted in the order of positions to which the multimedia information is related in the multimedia data.

In the mobile terminal 100 according to one embodiment of the present invention, a plurality of multimedia information is selected at one or more specific positions in the multimedia data [S30]. In this case, the controller 180 processes the selected plurality of multimedia information corresponding to the plurality of specific positions in the multimedia data. Therefore, when the multimedia data is played, the controller 180 outputs the processed plurality of multimedia information at the plurality of selected positions in the multimedia data [S30, S40].

Selecting the multimedia information may be performed in various ways. For example, a user of the mobile terminal 100 selects further information related to one or more positions in the multimedia data. When the further information is stored on a website, a visitor to the website can select the further information related to the one or more positions in the multimedia data. For example, one or more comments frequently inquired by the website visitor may be selected from comments written in association with the plurality of specific positions in the multimedia data.

The controller 180 outputs the selected further information while the multimedia data is being played. For example, if the played multimedia data is a moving picture and further information includes a comment written in association with specific positions in the multimedia data, the controller 180 displays the comment on a partial area of the moving picture being generated from the played multimedia data. For example, the controller 180 displays a scene comment at a lower end portion of the moving picture in a caption format.

Further, the controller 180 displays the comment at a specific position in the multimedia data. For example, if comments such as 'Cool' and 'Impressed' were entered at positions corresponding to 15 seconds and 2 minutes, respectively, in the played multimedia data, these comments are displayed as captions at positions corresponding to 15 seconds and 2 minutes, respectively, while the moving picture is played. Hence, a user of the mobile terminal 100 views the played moving picture with the comments displayed as captions.

When the played multimedia data is a music file and the further information includes a comment written in association with specific positions in the multimedia data, the controller 180 may convert the comment into audio at the specific positions in the multimedia data and then output the converted comment as audio. Further, the controller 180 may display the comment as a popup at the specific positions in the multimedia data while the music file is being played. In one aspect of the present invention, if the multimedia information related to the specific position in the multimedia data is not selected [S30], the controller 180 outputs the sorted multimedia information when playing the multimedia data [S50].

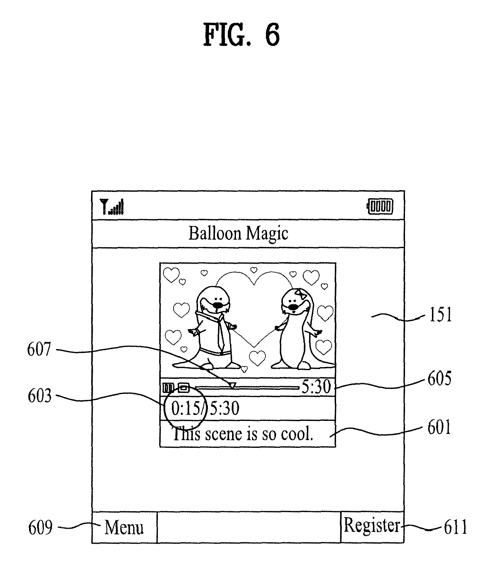

Referring to FIG. 6, the mobile terminal 100 plays multimedia data stored in the memory 160 and an image of a moving picture generated from the played multimedia data is shown on the display 151 of the mobile terminal. While the multimedia data is being played, a user writes a comment related to a specific position in the multimedia data. For example, when a notable scene is displayed at a position corresponding to 15 seconds in the multimedia data, the user may write a comment related to the notable scene. Thus, the position corresponding to 15 seconds is specified by the user. Time information 603 on the specific position in the played multimedia data as specified by the user is displayed near a comment input window 601.

The time information 603 may be displayed when the comment input window 601 is selected at the specific position of the played multimedia data or if a position indicator 607 is selected on a progress bar 605, which indicates progress of the multimedia play. Alternatively, the time information related to the specific position in the multimedia data may be displayed when a specific key signal for the specific position in the multimedia data is input. Further, the controller 180 may display the time information 603 corresponding to the specific position upon entry of a 'Menu' 609 item.

The written comment related to the specific position in the multimedia data is displayed on the comment input window 601. When a user finishes writing the comment, the user registers the comment as multimedia information by selecting a 'Register' key 611. The registered comment or multimedia information may be stored in the memory 160. The controller 180 sends the stored multimedia information to a communicating party. The controller 180 may also store the multimedia information including the written comment related to the specific position in the multimedia data right after sending the multimedia information to the communicating party. Alternatively, the controller 180 may send the multimedia information related to the specific position in the multimedia data without storing the multimedia information in the memory 160.

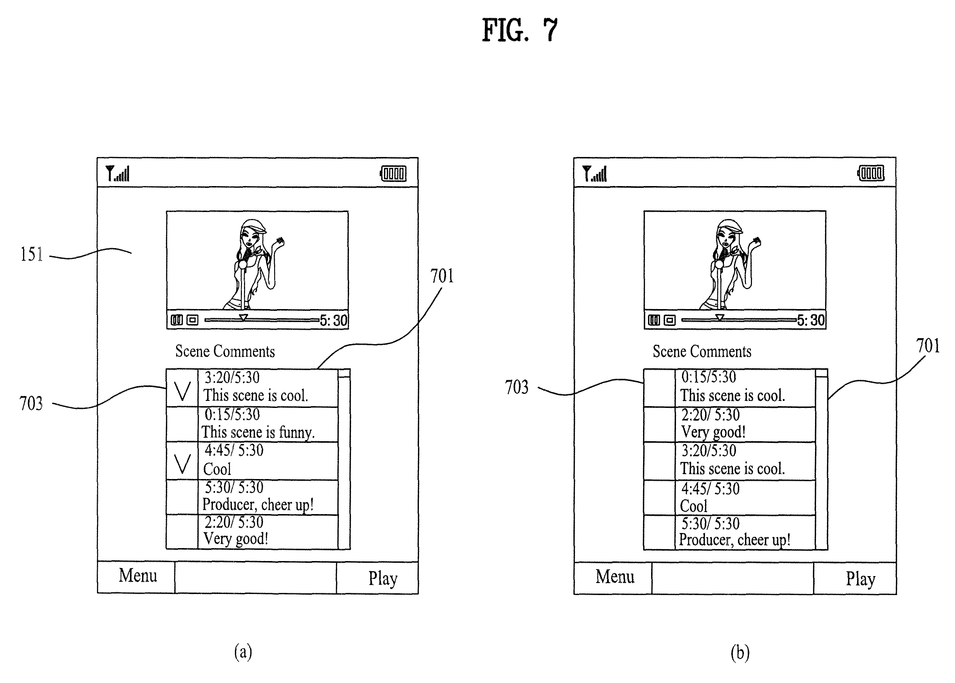

FIG. 7 illustrates sorting multimedia information related to a plurality of selected specific positions in the multimedia data according to chronological order or time information in a mobile terminal 100 according to one embodiment of the present invention. Referring to FIG. 7(a), the multimedia information or scene comments stored in the memory 160 is sorted according to chronological order or in the order that the multimedia information has been input. A popup window 701 listing comments written in association with the specific positions in the multimedia data is displayed on a screen of the display 151. Check-boxes 703 for selecting a specific comment are positioned next to each comment in the popup window 701.

The controller 180 may re-sort the comments, which have been previously sorted and displayed in the chronological order, according to a different order with different criteria. For example, the controller 180 may re-sort the comments according to time information or in order of specific positions to which the multimedia information is related in the multimedia data, as shown in FIG. 7(b).

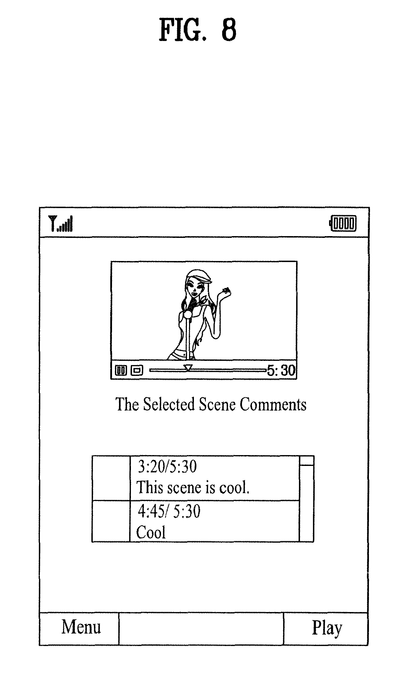

Further, in one aspect of the present invention, the controller 180 resorts only the specific comments selected via the check-boxes 703. For example, the two comments in the popup window 701 which are selected, as shown in FIG. 7(a), are sorted and displayed on the screen, as shown in FIG. 8.

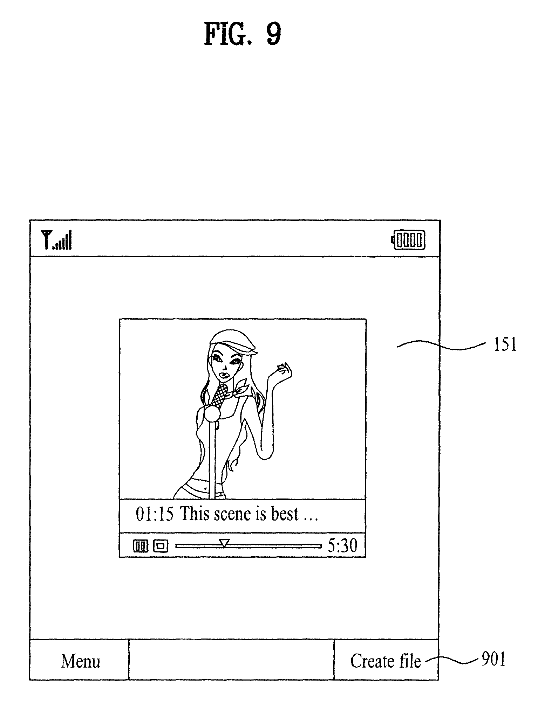

FIG. 9 illustrates outputting the multimedia information related to the selected at least a first specific position in the multimedia data while the multimedia data is being played in the mobile terminal 100 according to one embodiment of the present invention. Referring to FIG. 9, a screen for reproducing a moving picture from the multimedia data is displayed on the display 151. The moving picture may be produced by a user, received from a different terminal, or received from a broadcasting station as broadcast multimedia data.

The controller 180 displays a comment written in association with a specific position in the multimedia data in a caption format on the moving picture play screen. The controller 180 displays the comment corresponding to the specific position in the multimedia data.

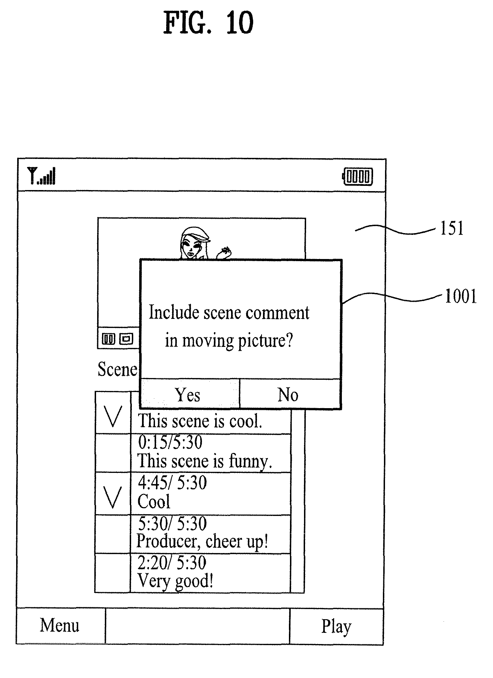

When the written comments are selected, as shown in FIG. 8, the selected comments are displayed on the screen of the display 151 and the controller 180 generates a single multimedia data file by combining the multimedia data with the selected multimedia information. This is described with reference to FIG. 10.

Referring to FIG. 10, if the 'Create file' 901 menu shown in FIG. 9 is selected, the controller 180 displays a popup window 1001 prompting a user to select whether to generate a single multimedia file to combine the moving picture file with a scene comment or the multimedia information. If 'Yes' is selected in response to the prompt by the popup window 1001, a new moving picture file including the scene comment is created.

The controller 180 then separates the multimedia information from the multimedia data and creates a single multimedia data file including the selected multimedia information. The created single multimedia data file may be transmitted to a different terminal via the wireless communication unit 110. Specifically, the created file may be transmitted by an e-mail, an MMS (multimedia message service), a SMS (short message service), an IM (instant message), or short-range communication. Further, the created file may be uploaded to a specific website.

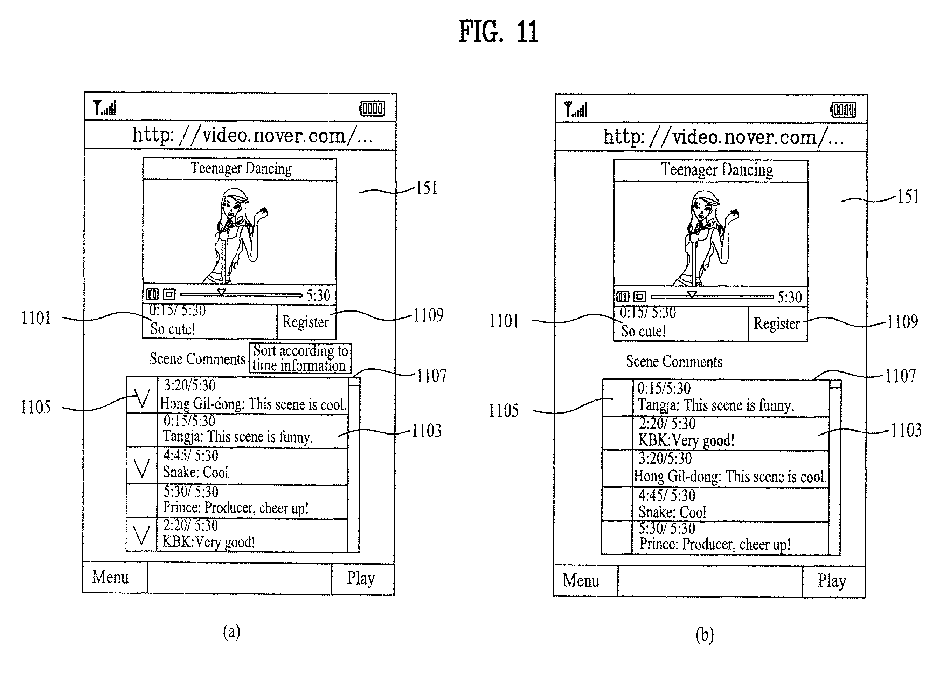

The mobile terminal 100 according to one embodiment of the present invention performs a specific function using the multimedia information stored in the specific website. FIG. 11 illustrates sorting the multimedia information stored in the specific website according to chronological order or time information in a mobile terminal 100 according to one embodiment of the present invention.

Referring to FIG. 11(a), a URL of a website, in which multimedia data is stored, is displayed at an upper portion of a screen on the display 151. An image displayed on the screen represents an image generated from a reproduced moving picture stored in the specific website.

A user may write a comment on specific positions in the multimedia data while viewing the moving picture generated from the played multimedia data. For example, the user writes a comment related to a specific position corresponding to 15 seconds in the multimedia data and the written comment is displayed on an input window 1101. When the comment writing is finished, the user registers the written comment by selecting the 'Register' menu 1109 provided near the input window 1101. The multimedia information or the written comment is stored or registered on the website.

Through the 'Scene Comments' list 1107 shown on the screen, a user may browse comments written by website visitors in association with specific positions in the multimedia data. For example, the comment 1103 "This scene is funny" written by the website visitor with an ID, 'Tangja' is displayed in the 'Scene Comments' list 1107.

The controller 180 may re-sort the comments, which are written on the website by the user or a different website visitor in association with the specific positions in the multimedia data, according to various criteria. For example, the comments may be sorted according to time information when the prompt 'Sort according to time information' is selected and a scene comment that is positioned at an earliest position in the multimedia data is displayed at the top of the list 1107 while a scene comment that is positioned at the latest position in the multimedia is displayed at the bottom of the list. As shown in FIG. 11(b), the scene comment corresponding to the earliest position, i.e., 0:15 or 15 seconds in the multimedia data, is displayed at the top of the 'Scene Comments' list 1107 and the scene comment corresponding to the latest position, i.e., 5:30 or 5 minutes and 30 seconds in the multimedia data, is displayed at the bottom of the list.

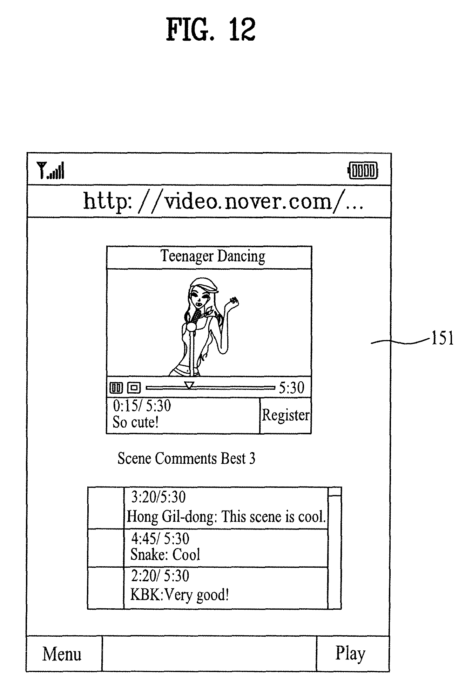

A checkbox 1105 for the scene comment selection may be displayed next to each scene comment in the 'Scene Comments' list 1107. When at least one scene comment is selected, as shown in FIG. 11(a), the controller 100 re-orders only the at least one selected scene comment, as shown in FIG. 12.

The controller 100 extracts a comment selected by a visitor of the website only. Referring to FIG. 12, only the desired comments frequently inquired or recommended by the website visitors may be selected from a plurality of comments, as shown in FIG. 12. For example, three selected scene comments or 'Scene Comments Best 3,' as selected by the website visitors, are displayed on the screen.

In one aspect of the present invention, the mobile terminal 100 according to one embodiment of the present invention downloads multimedia data and the related multimedia information stored on the website, and then stores the downloaded multimedia data and multimedia information in the memory 160. The controller 180 may download the multimedia data and the multimedia information as separate data files or the controller 180 may download the multimedia data and the multimedia information in a single file format by creating a new data file that can output the multimedia information together with the multimedia data when the multimedia data is played.

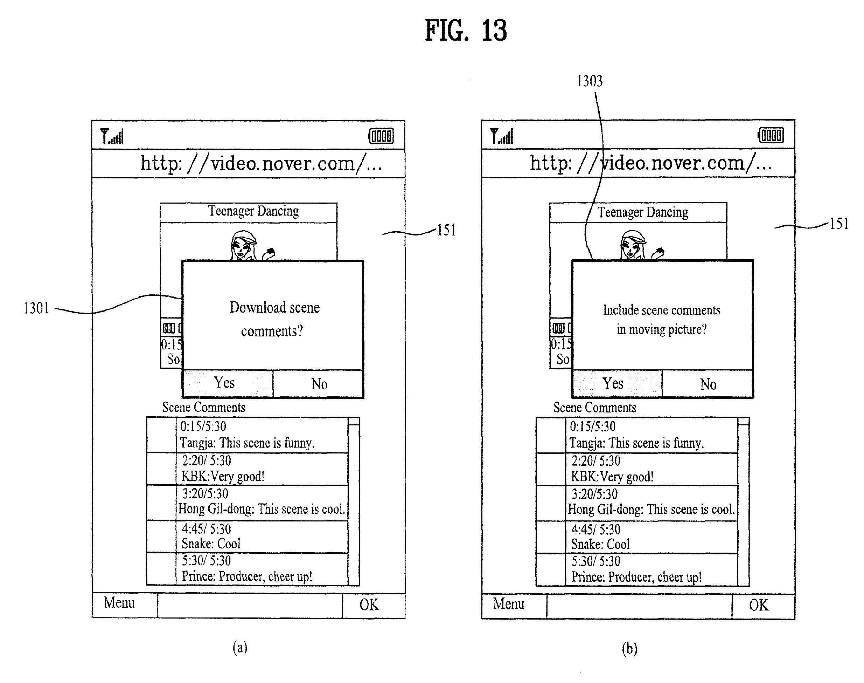

Alternatively, the controller 180 may separately download multimedia information corresponding to a specific position in the multimedia data such that the multimedia information related to the specific position in the multimedia data is separated from the multimedia data, as shown in FIG. 13. Referring to FIG. 13(a), a scene comment is downloaded separately from a moving picture file. Specifically, the controller 180 displays a popup window 1301 prompting a user to select whether to download scene comments and the scene comments are downloaded when 'Yes' is entered or a 'shortcut key' is selected.

This function is useful when the moving picture file stored in the website is already stored in the memory 160 of the mobile terminal 100. Therefore, the controller 180 plays the moving picture file stored in the memory 160 using the downloaded multimedia information related to the specific position in the multimedia data. For example, the controller 180 controls the downloaded scene comment such that the scene comment is displayed in a caption format on a moving picture play screen.

In one aspect of the present invention, the controller 180 sends a file for the multimedia information to a different terminal by an e-mail, an MMS, a SMS, an IM, or short-range communication. The controller 180 may store the multimedia information in a user's database (DB) that is present on a website.

For example, the controller 180 stores the multimedia information sorted according to the time information in the DB. Further, the controller 180 extracts the multimedia information selected by a website visitor and then stores the extracted multimedia information in the DB. Furthermore, the controller 180 extracts the multimedia information selected by a user and then stores the extracted multimedia information in the DB. In addition, the controller 180 extracts user-written multimedia information and then stores the extracted multimedia information in the DB.

The DB-stored multimedia information may be edited by the user or shared with the website visitor. The DB may be generated such that the stored multimedia information corresponds to an ID for an access to the website.

In one aspect of the present invention, the controller 180 controls the multimedia information to be output together with the multimedia data while the multimedia data is being played on the website. The controller 180 may directly control the play of the multimedia data. Further, the controller 180 may transmit a specific command signal to the website such that the play is controlled on the web.

Referring to FIG. 13(b), if an item for 'file creation' is provided to the website and selected, a popup window 1303 is displayed prompting a user to select whether to include scene comments in a moving picture by generating a single file of a moving picture with a comment displayed in a caption format during the play of the multimedia data.

Accordingly, a new moving picture file including the scene comment is created via selection through the popup window 1303. The created moving picture file may be downloaded to the mobile terminal 100 and transmitted to a different terminal.

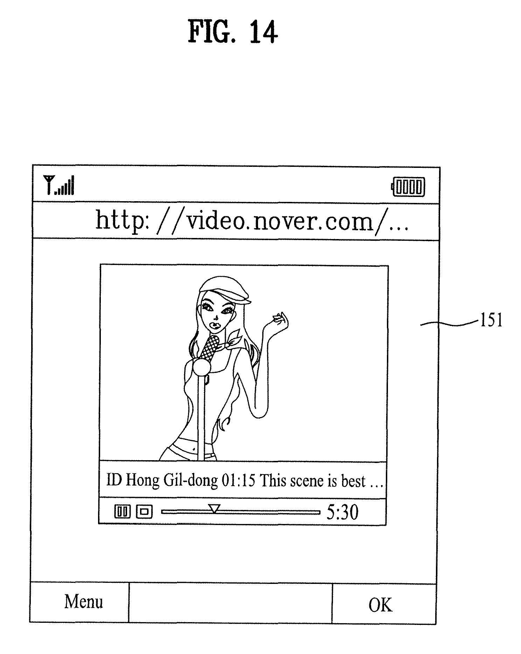

FIG. 14 illustrates playing multimedia data stored in a website using multimedia information related to specific positions in the multimedia data in a mobile terminal 100 according to one embodiment of the present invention. Referring to FIG. 14, a screen displays a moving picture file on a website. The moving picture may be a moving picture produced by a user or received from a different terminal, or a broadcast multimedia data received from a broadcasting station.

The controller 180 displays a comment written in association with specific positions in the multimedia data in a caption format on the moving picture play screen. The controller 180 displays the comment corresponding to the specific positions in the multimedia data. If at least one written comment is selected among a plurality of written comments input by a user or a website visitor, only the at least one selected comment is displayed on the screen during the play of the multimedia data.

According to one embodiment of the present invention, the controller 180 extracts a control signal enabling the multimedia data stored in a mobile terminal 100 or a specific website to be played from specific positions in the multimedia data. For example, the controller 180 plays the multimedia data from a position corresponding to 15 seconds of the played multimedia data using the control signal.

Further, the controller 180 may select a plurality of specific positions in the multimedia data. For example, the controller 180 selects positions corresponding to 15 seconds, 2 minutes, and 2 minutes and 35 seconds as specific positions in the multimedia data. When there is a plurality of the specific positions in the multimedia data, the controller 180 extracts a plurality of control signals respectively corresponding to the specific positions in the multimedia data.

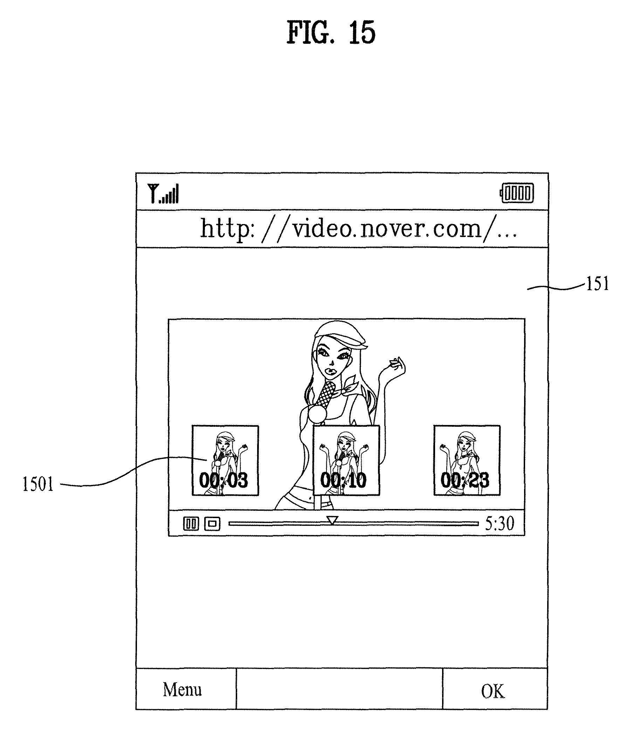

Furthermore, the controller 180 may display frames of multimedia data corresponding to the extracted control signal on a partial area of a play screen on the display 151. If a specific frame is selected, the controller 180 plays the multimedia data from a position corresponding to the selected frame, as shown in FIG. 15.

Referring to FIG. 15, a specific frame 1501 corresponding to an extracted control signal is displayed on a screen of the display 151. If a prescribed frame is selected from a plurality of frames 1501, the controller 180 switches images displayed on the screen accordingly such that the multimedia data is played from a specific position in the multimedia data corresponding to the selected frame.

For example, if the screen includes a touchscreen, a second frame can be selected by a touch input. In response to the touch of the second frame on the display 151, the controller 180 plays the multimedia data from a position corresponding to 00: 10 or 10 seconds. The controller 180 extracts a control signal corresponding to the multimedia information selected by a user or a website visitor.

The present invention allows electronic devices differing from each other in decoding capacity or storage size to share further information related to a specific position in multimedia data. For example, a laptop or personal computer downloads multimedia information related to a specific position in the multimedia data that is stored in a mobile phone to share the multimedia information. Similarly, a mobile phone also downloads the multimedia information stored in a laptop or personal computer to share the multimedia information. Hence, the multimedia information related to the specific position in the multimedia data can be backed up in another electronic device.

The methods of the present invention can be implemented in a program recorded medium as computer-readable codes. The computer-readable media include all kinds of recording devices in which data readable by a computer system are stored. The computer-readable media include ROM, RAM, CD-ROM, magnetic tapes, floppy discs, optical data storage devices, and the like for example and also include carrier-wave type implementations, for example, transmission via Internet. And, the computer also includes the controller 180 of the mobile terminal 100.

Accordingly, the present invention provides the following advantages.
First, multimedia information related to a specific position in the multimedia data is sorted according to time information in the multimedia data or in order of playtime, thereby allowing the mobile terminal to perform a specific function corresponding to the multimedia information while playing the multimedia data. Second, the multimedia information related to a specific position in the multimedia data is output when the multimedia data is played, thereby enabling a user to check the multimedia information corresponding to specific positions in the multimedia data while the multimedia data is being output.

It will be apparent to those skilled in the art that various modifications and variations can be made in the present invention.

## Claims

1. A mobile terminal (100), comprising:
a user input unit (130) adapted for receiving user inputs;
a display unit (151) adapted for displaying multimedia data and related multimedia information; and
a controller (180),
wherein the controller is adapted for
processing a user input to select at least a first specific position in said multimedia data;
controlling the display unit to display the multimedia information related to the multimedia data and depending upon said selected at least a first specific position; and
sorting (S20) the multimedia information related to the multimedia data with respect to at least a second specific position in the multimedia data.

2. The mobile terminal of claim 1, wherein the controller is adapted for playing the multimedia data according to time information.

3. The mobile terminal of any one of claims 1 or 2, wherein the controller is further adapted for controlling the display unit to display the multimedia information such that further information related to a user-selected one of the at least a first specific position or at least a second specific position is displayed even when the multimedia is not played.

4. The mobile terminal of any one of claims 1 to 3, further comprising a memory for storing the multimedia data, wherein the controller is adapted for controlling the display unit to display the multimedia information while playing the multimedia data stored in the memory.

5. The mobile terminal of any one of claims 1 to 4, wherein the multimedia data is stored in a specific website and the controller is adapted for controlling the display unit to display the further information while playing the multimedia data stored in the specific website.

6. The mobile terminal of claim 5, wherein the controller plays the multimedia data from a specific position corresponding to a specific point selected by the website visitor in the further information.

7. The mobile terminal of any one of claims 4 to 6, wherein the controller is adapted for controlling the display unit to display the multimedia information on a play screen related to the multimedia data such that the multimedia information corresponds to the multimedia data being played.

8. A method of playing multimedia data in a mobile terminal (100), the method comprising, performed in the mobile terminal:
processing a user input to select at least a first specific position in multimedia data;
displaying (S10, S40, S50) multimedia data and multimedia information related to the multimedia data and depending upon said selected at least a first specific position; and
sorting (S30) the multimedia information with respect to at least a second specific position.

9. The method of claim 8, further comprising playing the multimedia data according to time information.

10. The method of any one of claims 8 or 9, further comprising displaying the multimedia information such that further information related to a user-selected one of the at least a first specific position or at least a second specific position is displayed even when the multimedia is not played.

11. The method of any one of claims 8 to 10, further comprising:
storing the multimedia data; and
displaying the multimedia information while playing the stored multimedia data.

12. The method of any one of claims 8 o 11, further comprising:
accessing the multimedia data that is stored on a specific website; and
displaying the further information while playing the multimedia data stored in the specific website.

13. The method of claim 12, further comprising playing the multimedia data from a specific position corresponding to a specific point selected by the website visitor in the further information.

14. The method of any one of claims 11 to 13, further comprising displaying the further information such that the further information corresponds to the multimedia data being played.
